# NEUE EUROPÄISCHE PATENTSCHRIFT

(11) **EP 0 728 124 B2**
(45) Veröffentlichungstag und Bekanntmachung des Hinweises auf die Entscheidung über den Einspruch: **27.12.2000**
(45) Hinweis auf die Patenterteilung: 28.05.1997
(21) Anmeldenummer: 95900710.5
(22) Anmeldetag: 11.11.1994
(51) Int. Cl.: C04B 41/50, C04B 28/24

(54) **MINERALWOLLEPRODUKT SOWIE VERFAHREN ZU SEINER HERSTELLUNG, BESCHICHTUNGSMASSE HIERFÜR UND DEREN VERWENDUNG**
ROCK WOOL PRODUCT AND PROCESS FOR ITS MANUFACTURE, COATING MATERIAL THEREFOR AND USE THEREOF
PRODUIT EN LAINE MINERALE, SON PROCEDE DE PRODUCTION, MATIERE DE REVETEMENT ET SON UTILISATION

(30) Priorität: 11.11.1993 DE 4338619; 07.10.1994 DE 4435915
(43) Veröffentlichungstag der Anmeldung: 28.08.1996
(73) Patentinhaber: Grünzweig + Hartmann AG, D-67059 Ludwigshafen (DE)
(72) Erfinder: KUMMERMEHR, Hans, D-67059 Ludwigshafen (DE)
(74) Vertreter: Kuhnen & Wacker
(86) Internationale Anmeldenummer: EP9403735
(87) Internationale Veröffentlichungsnummer: WO9513252

(56) Entgegenhaltungen:
- EP-A- 0 114 965
- WO-A-84/00041
- DE-A- 3 248 661
- DE-A- 4 215 468
- DK-A- 69 522
- FR-A- 2 514 043
- SE-A- 74 588
- US-A- 4 376 142
- CHEMICAL ABSTRACTS, vol. 107, no. 14, 5. Oktober 1987, Columbus, Ohio, US; abstract no. 120045t, & FI,A,72 538 (ILVESVILLA OY) 27. Februar 1987

## Beschreibung

Die Erfindung betrifft ein beschichtetes Mineralwolleprodukt, wie eine Fassadendämmplatte oder Dachdämmplatte, mit einer Beschichtung auf der Basis eines anorganischen silikatischen Bindemittels, wobei die Beschichtung im wesentlichen in dem an die Produktoberfläche angrenzenden Bereich innerhalb der Mineralwolle angeordnet ist, nach dem Oberbegriff des Anspruchs 1. Sie betrifft weiter ein zu ihrer Herstellung besonders geeignetes Verfahren, eine dafür verwendbare Beschichtungsmasse mit einer Trägerflüssigkeit für die Aufbringung und eine weitere Verwendung der Beschichtungsmasse.

Beschichtete Mineralwolleprodukte in Form von Fassaden- oder Dachdämmplatten sind beispielsweise aus der EP 0 114 965 B1 bekannt und haben sich in der Praxis durchaus bewährt. Derartige Beschichtungen haben je nach Anwendungsfall eine Reihe besonderer Anforderungen. So muß die Beschichtung z.B. bei der Verwendung als Dachdämmplatte für Bitumen undurchlässig sein, und darüber hinaus muß eine Dachdämmplatte zumindest vorübergehend begehbar sein. Bei Verwendung als Fassadendämmplatte muß die Beschichtung sich als Putzträger eignen, also sowohl eine ausreichende Haftung gegenüber der regelmäßig hydrophob ausgerüsteten Mineralwolleplatte als auch gegenüber mineralischen oder kunstharzgebundenen Putzen aufweisen; die letztere Anforderung erfordert beispielsweise eine gewisse Diffusionsoffenheit der Beschichtung, damit der Putz auf der Seite der Beschichtung Wasser abgeben und so unter Erzielung einer Haftverbindung austrocknen kann. Weiterhin muß die Beschichtung der Verfestigung der Oberfläche dienen, um die durch das Gewicht des Putzes sowie Windkräfte und dergleichen einwirkenden Kräfte aufzunehmen.

Neben derartigen Anforderungen an solche Beschichtungen spielen die Frage, wie die Beschichtung auf die Oberfläche des Mineralwolleproduktes aufgebracht werden kann, und natürlich die Kosten der Beschichtung eine große Rolle. Hinzu kommt noch die Frage, inwieweit die Oberfläche des Mineralwolleprodukts durch das Aufbringen einer Beschichtung beeinträchtigt wird. So wird beispielsweise nach der EP 0 114 695 B1 die dortige Beschichtungsmasse in einer gewünschten Konsistenz unter erheblichem Druck in die Oberfläche der Mineralwolleplatte eingedrückt; dabei werden in den oberflächennahen Bereichen der Mineralwolleplatte Mineralfasern gebrochen, welche zwar gleichzeitig als Armierung dienen, jedoch insgesamt die Zugfestigkeit der beschichteten Platte vermindern.

Die FR-A-2 514 043 offenbart einen Faserwerkstoff, der insbesondere aus Mineralfasern besteht und im Bereich seiner Oberflächen mit einer flüssigen Lösung einer Bindemittelfüllmasse beaufschlagt wird. Nach dem Verdampfen des Lösemittels aus der Bindemittelfüllmasse schrumpft diese um die Fasern herum zusammen und haftet an diesen Dadurch bleiben die Zwischenräume zwischen den Fasern erhalten, so daß sich eine offenzellige Oberflächenstruktur ergibt, deren Porösität annähernd der des unbeschichteten Materials entspricht.

Eine derartige Beschichtung verbessert zwar die mechanischen Eigenschaften des Faserwerkstoffs, aber die erforderliche Festigkeit, um z.B. dem Gewicht des Putzes oder Windkräften bzw. einer Begehbarkeit bei Verwendung als Dachdämmplatte standzuhalten, wird oftmals nicht im gewünschten Ausmaße erreicht. Eine höhere Festigkeit ließe sich nach der Lehre der FR-A-2 514 043 zwar durch eine Erhöhung der Beschichtungsmenge erreichen, was aber zur Folge hätte, daß sich die Porosität des Faserwerkstoffes infolge des "Zuwachsens" der Zwischenräume durch das Beschichtungsmaterial von der Faseroberfläche her deutlich verringert. Damit kann der Putz seine Feuchtigkeit nur verzögert abgeben und die Haftverbindung zwischen dem Putz und dem Faserwerkstoff wird nachteilig beeinflußt.

Aus der WO-84/00041 ist es weiter bekannt, ein weiches Mineralwollevlies in einem Walzenspalt auf einen Bruchteil seiner Dicke zu komprimieren und dabei vorgeschäumtes organisches Bindemittel oder dgl. durch Öffnungen in der Walzenoberfläche zuzuführen. Durch die Rückfederung des Vlieses nach dem Walzenspalt wird das Bindemittel im Wollematerial verteilt.

Der Erfindung liegt die Aufgabe zugrunde, ein beschichtetes Mineralwolleprodukt anzugeben, dessen Beschichtungsmasse in einer für die Großserienfertigung geeigneten Weise ohne Beseitigung der offenen Struktur der Oberfläche des Mineralwolleproduktes aufgebracht werden kann und dabei eine ausreichende Festigkeit des Mineralwolleprodukts ermöglicht.

Die Lösung dieser Aufgabe erfolgt durch die kenzeichnenden Merkmale des Anspruchs 1.

Dadurch wird erreicht, daß die beispielsweise auf das fünf- oder sechsfacne Volumen aufgeschaumte Schaummasse mit sehr geringer Rohdichte leicht in die Oberfläche des Mineralfaserproduktes eindringt und die dortigen Fasern vollkommen umgibt ohne wesentliche mechanische Kräfte hierauf auszuüben Dabei kann die lockere Schaummasse z.B. mit einer Rakel sanft bis zu einer im wesentlichen durch die eingedrückte Schaumschichtdicke bestimmten er in die Oberfläche eingedrückt werden. Dieser Vorgang ist herstellungstechnisch auch in der Großserienfertigung gut beherrschbar und damit kostengünstig und zuverlässig durchführbar.

Während des Trocknens oder Aushärtens bildet sich der aufgebrachte Schaum in der Weise zurück, daß die Schaumbläschen nach und nach zerplatzen oder zerbersten, wobei die so frei werdende Beschichtungsmasse aus Bereichen zwischen den einzelnen Fasern durch Adhäsion auf die Fasern gelangt und diese umhüllt Dabei können Brücken aus Beschichtungsmaterial Abstände zwischen benachbarten Fasern überspannen, es werden dabei jedoch in jedem Falle porenartige Öffnungen zwischen den Fasern freigegeben.

Durch die erhebliche Volumenvergrößerung kann die Benetzung und Beschichtung der Oberfläche des Mineralwolleproduktes mit einer erheblich verminderten Menge an Beschichtungsmasse erfolgen, so daß sich erhebliche Einsparungen an Rohstoff- und Gesamtherstellungskosten ergeben Hinzu kommt eine Verminderung der Trocknungszeit bzw. eine Verringerung der erforderlichen Trocknungskapazitäten, was eine kostengünstige Fertigung weiter unterstützt. Soweit die Beschichtung auch unter bestimmten Gesichtspunkten nicht erwünschte Stoffe in das Produkt einbringt, ist deren Menge entsprechend reduziert und ergibt sich ein entsprechend verminderter Aufwand zur Neutralisierung etwaiger unerwünschter Effekte. Bei der Verwendung organischer Stoffe in der Beschichtungsmasse beispielsweise und der gleichzeitigen Notwendigkeit der Erzielung einer dadurch gefährdeten guten Bandschutzklasse, wie beispielsweise die Baustoffklasse A2 - nichtbrennbare Baustoffe - gemäß DIN 4102. wird durch die mit der Menge der Beschichtungsmasse ebenfalls verminderte Menge an organischen Stoffen die Brandlast vermindert Demzufolge kann auch der Einsatz von Flammschutzmitteln minimiert oder auf umweltfreundliche, beispielsweise Stickstoff oder Wasser abspaltende Flammschutzmittel beschränkt werden.

Ein solcher Schaum der eine Trägerflüssigkeit wie Wasser enthaltenden Beschichtungsmasse kann durch eine an sich bekannte Treibmittelschäumung erzeugt werden. Vorzugsweise wird der erfindungsgemäße Schaum jedoch mechanisch nach dem Schlagschaumverfahren oder mittels Dissolverscheiben hergestellt. Dabei wird durch Einschlagen von Luft ein streichfähiger Schaum gebildet, der auf die Produktoberfläche aufgetragen und in die Produktoberfläche sanft eingedrückt werden kann. Die sich später verflüchtigende Trägerflüssigkeit wie Wasser dient auch dazu, die Viskosität der Beschichtungsmasse soweit herabzusetzen, daß eine mechanische Schäumung nach dem Schlagschaumverfahren mit Dissolverscheiben erleichtert wird.

Bevorzugt wird als Stoffgemisch für die aufzubringende Beschichtungsmasse eine wäßrige Mischung aus Kieselsol (kolloidale Kieselsäure), Schaumbildner und Schaumstabilisator verwendet, der bei Bedarf Flammschutzmittel und weitere Zuschlagstoffe zugesetzt sein können.

Eine erfindungsgemäß beschichtete Mineralwolleplatte eignet sich in ganz besonderer Weise als Fassadendämmplatte für Außenwände oder als sogenannte Innenputz-Dämmplatte für Innenwände, die an Räume mit gleichen Temperaturen grenzen, welche mit einem feuchten fließfähigen Material wie Putz zu versehen ist, welches im Zuge der Trocknung anhaftet. Insoweit kommt der Verfestigung der Oberfläche durch den dort eingedrungenen Schaum besondere Bedeutung zur Abstützung gegen Kräfte zu. Die zwischen den einzelnen Fasern der Faseroberfläche des Mineralwolleproduktes verbleibenden kleinen Zwischenräume gestatten eine Verkrallung mit dem Material des Putzes oder dergleichen, wobei an die Stelle des Konzeptes einer im wesentlichen geschlossenflächigen Oberfläche wie bei herkömmlichen Putzträgerschichten hier das Konzept einer relativ tiefen Imprägnierung der oberflächennahen Fasern mit der schaumförmigen eingebrachten Beschichtungsmasse tritt. Anders als bei im wesentlichen geschlossenflächigen Oberflächen kann das Putzmaterial also etwas in die offene Wolleoberfläche eindringen, findet aber dort nur vom Beschichtungsmaterial abgeschirmte Fasern vor, die sich zur Abstützung des Materials des Putzes oder dergleichen eignen. Besondere Bedeutung insoweit haben die großzügigen Abfuhröffnungen für Wasser und Wasserdampf in Form der Poren zwischen den einzelnen beschichteten Fasern. Diese ermöglichen eine besonders wirkungsvolle Abfiltrierung des Wassers oder allgemein der Trägerflüssigkeit der aufzubringenden Masse wie Putz, so daß sich von daher eine hervorragende hydraulische Haftung der sich in das Mineralfaserprodukt hinein entwässernden Putzschicht oder dergleichen ergibt. Auch die endgültige Austrocknung zur Erzielung der endgültigen Haftverbindung ist durch die Diffusionsoffenheit der beschichteten Oberfläche des Mineralfaserproduktes gewährleistet.

Eine erfindungsgemäß beschichtete Platte eignet sich auch als Dachdämmplatte, da Bitumen an einem Eindringen in die Platte durch das Beschichtungsmaterial hindurch gehindert werden kann. Die verbleibenden Poren zwischen den mit Beschichtungsmaterial umhüllten Fasern sind im Hinblick auf die Oberflächenspannung flüssigen Bitumens und seine Viskosität zu klein, um ein Eindringen zu ermöglichen. Die mechanische Verfestigung der Oberfläche über eine nicht unerhebliche Schichttiefe hinweg kommt der Platte auch bei einer solchen Verwendung sehr zu gute.

Bevorzugt enthält die Beschichtungsmasse neben dem Kieselsol (kolloidale Kieselsäure) und Schäumungsmitteln wie Schaumbildner und Schaumstabilisator eine organische Komponente in Form einer Kunststoffdispersion. Hierdurch wird die Sprödigkeit des getrockneten oder ausgehärteten Beschichtungsmaterials deutlich vermindert und ein elastisch nachgiebiges Verhalten der Schicht erzeugt. Offenbar dringen hierzu Kunststoffpartikel zwischen die SiO₂-Partikel und machen diese elastisch relativbeweglich. Eine solche Elastizität der Schicht ist für viele Anwendungsfälle von Bedeutung und in der Alltagspraxis schon allein deshalb wichtig, weil sie die Beschichtung im Bereich der Ecken stabilisiert, die häufig bei der Handhabung Biegebelastungen ausgesetzt sind und durch Beschichtungsbrüche ein unansehnliches Aussehen erhalten können.

Als Kunststoffdispersion kommt im Prinzip jede witterungsbeständige, wasserbeständige und lichtechte Kunststoffdispersion in Frage. Besonders bevorzugt im Rahmen der vorliegenden Erfindung ist Bayceram® der Bayer AG, eine Polyester-Polyurethan-Dispersion, welche die geschilderten Eigenschaften erfüllt und besonders gute Elastizität verleiht.

Gemäß einer Ausführungsform der erfindungsgemäß verwendeten geschäumten Beschichtungsmasse enthält diese

| | |
|---|---|
| 25 bis 40 Gew % | Kieselsol (40 Gew.% Fest stoffananteil SiO₂) |
| | |
| 2 bis 10 Gew.% | Kunststoffdispersion |
| | |
| 0,3 bis 1,5 Gew.% | Schaumbildner |
| | |
| 0,05 bis 0,5 Gew.% | Schaumstabilisator |
| | |
| | Flammschutzmittel nach Bedarf |
| | |
| Rest | Wasser |

Die Menge der aufgebrachten Beschichtungsmasse liegt konventionell bei etwa 300 g/m² (trocken) für übliche Anwendungen wie zum Beispiel Fassadendämmplatten. Erfindungsgemäß kann diese Menge erheblich vermindert werden. So beträgt die Menge der erfindungsgemäß aufgetragenen Beschichtungsmasse zwischen 20 und 100 g/m² (trocken), wobei die Obergrenze eher delikaten Anwendungsfällen vorbehalten bleibt, wie etwa die Beschichtung der Stirnfläche eines Mineralwolleproduktes, zu der die bevorzugte Faserrichtung im wesentlichen senkrecht steht. Eine solche Aufgabe ergibt sich etwa bei der Beschichtung von sogenannten Lamellenplatten, also Platten mit besonders hoher Druckfestigkeit, bei denen die bevorzugte Faserrichtung im wesentlichen senkrecht zu den beiden Großflächen verläuft und wie sie auch für Fassadendämmplatten verwendet werden können. Hier dringt die Beschichtungsmasse entlang den Fasern besonders leicht und tief in die Oberfläche des Mineralwolleproduktes ein und ist somit eine größere Menge an Beschichtungsmasse erforderlich, um die gewünschte Konsistenz im oberflächennahen Bereich zu erreichen.

In aller Regel reicht erfindungsgemäß eine Auftragsmenge von 30 bis 80 g/m² (trocken), insbesondere von 40 bis 70 g/m² (trocken) aus. Für gängige Anwendungen sind Auftragsmengen im Bereich von 50 g/m² oder wenig mehr typisch für die vorliegende Erfindung. Die vorstehenden Zahlenangaben beziehen sich auf das Gewicht der getrockneten Beschichtung.

Eine solche geschäumte Beschichtungsmasse eignet sich nicht nur zur herstellerseitigen Fertigung von so ausgerüsteten Mineralfaserprodukten, sondern kann auch zur nachträglichen Beschichtung bzw. Imprägnierung von Mineralwolleprodukten verwendet werden, die zunächst ohne eine solche Beschichtung bezogen wurden. Eine solche nachträgliche Beschichtung kann aus den verschiedensten Gründen zweckmäßig sein, jedoch hat die Erfindung insoweit besondere Bedeutung im Zusammenhang mit der Sanierung von Mineralwolleoberflächen, die z. B. durch Erosion und Ablösungen bedroht sind. Auch hier kann eine entsprechende Verfestigung der Oberfläche durch das Einarbeiten und Trocknen einer solchen geschäumten Beschichtungsmasse erfolgen, was im Hinblick auf die leichte Einarbeitbarkeit des Schaums auch vor Ort keine Schwierigkeiten bereitet. Etwa eine Mineralwolledämmschicht einer hinterlüfteten Fassade eines Industriegebäudes kann so gegen Ablösungen und Erosion durch Windkräfte gesichert und auf diese Weise auch nach langer Standzeit saniert werden.

### Beispiel

| | |
|---|---|
| 40 Gew.% | Kieselsol (40 Gew.% Feststoffanteil SiO₂) |
| | |
| 13 Gew.% | Aluminiumhydroxid als Flammschutzmittel |
| | |
| 4 Gew.% | Bayceram® (Polyester-Polyurethan-Dispersion der Bayer AG, Wasseranteil 50%) |
| | |
| 0.5 Gew.% | W53 Schaumbildner der Fa Zschimmer & Schwarz |
| | |
| 0.4 Gew.% | PS1 Schaumstabilisator der Fa. Zschimmer & Schwarz |
| | |
| Rest | Wasser |

Diese Beschichtungsmasse wurde mit Hilfe eines Rührwerks auf das 6-fache des ungeschäumten Volumens aufgeschäumt und auf die Oberfläche einer Mineralwolleplatte aufgebracht und mit einer Rakel in diese eingebracht Anschließend wurde eine derart beschichtete Platte in einem Durchlaufofen kurz getrocknet Während des Aushärtens löst sich die Schaumstruktur auf. Dabei erfolgte eine feine Verteilung der Beschichtungsmasse in einem oberflächennahen Schichtbereich der Mineralwolleplatte. Die geschäumte Beschichtungsmasse wurde in einer Menge von ca 150 g/m2 aufgebracht und drang dabei mit einer Schichttiefe von etwa fünf Millimetern in die Oberfläche der Platte ein und umhüllte die oberflächennahen Fasern innerhalb der Eindringtiefe Die offene Oberflächenstruktur der Platte blieb dabei erhalten.

Das getrocknete Beschichtungsmaterial der fertigen Platte lag in einer Menge von ca. 50 g/m² vor und wies folgende Zusammensetzung auf:

| | |
|---|---|
| 50 Gew.% | Kieselsäure (Feststoff SiO₂) |
| 41 Gew % | Aluminiumhydroxid (enthaltend 34 Gew.% gebundenes Wasser zur Brandhemmung) |
| 6.2 Gew.% | Bayceram® |
| 1,55 Gew.% | W53 Schaumbildner |
| 1.25 Gew.% | PS1 Schaumstabilisator |

Weitere Einzelheiten, Merkmale und Vorteile der Erfindung ergeben sich aus der nachfolgenden Beschreibung einer Ausführungsform anhand der Zeichnung.

Es zeigt:
Fig. 1 eine schematische Darstellung des Einbringvorganges der geschäumten Beschichtungsmasse in die Oberfläche eines Mineralwolleprodukts und
Fig. 2 eine bildliche Darstellung der dadurch erzeugten beschichteten Oberfläche des Mineralwolleproduktes

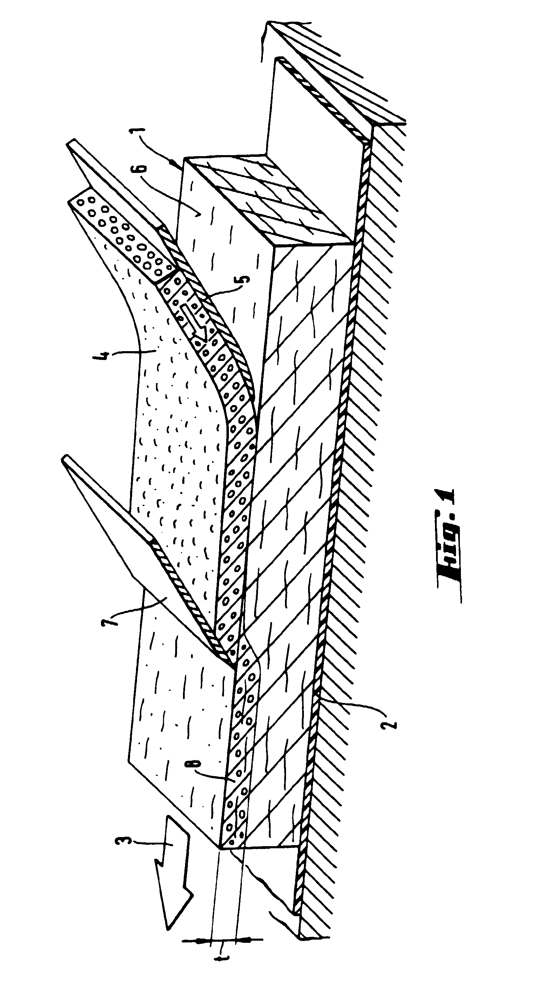

In Fig. 1 ist schematisch dargestellt, wie ein Mineralwolleprodukt 1 in Form eines Mineralwollefilzes auf einem Produktionsband 2 im Zuge seiner Herstellung in Richtung eines Pfeiles 3 bewegt wird. Mittels einer nicht näher dargestellten Schäummaschine ist Beschichtungsmasse aufgeschäumt und in Form einer Schaumschicht 4 auf eine Auftragvorrichtung 5 aufgegeben worden. Die auf der Oberfläche 6 des Mineralwolleproduktes 1 aufliegende Schaumschicht 4 wird von dem Mineralwolleprodukt 1 in Richtung des Pfeiles 3 mitgenommen und in den Wirkungsbereich einer Rakel 7 geführt. Vor der Rakel 7 dringt der Schaum der Schaumschicht 4 nur geringfügig in die Oberfläche 6 des Mineralwolleproduktes ein, da die Schaumschicht 4 äußerst geringes Gewicht besitzt. Erst unter dem Druck der Rakel 7 wird die Schaumschicht 4 in die Oberfläche 6 des Mineralwolleproduktes 1 hineingedrückt, wobei sich in Abhängigkeit von der Konsistenz der Schaumschicht 4 und der Oberfläche 6 des Mineralwolleproduktes 1 eine bestimmte, gleichmäßige Eindringtiefe t ergibt, die - ebenso wie die Dicke der Schaumschicht 4 - in der Darstellung gemäß Fig. 1 zur Verdeutlichung übertrieben groß dargestellt ist. Da die Rakel 7 nur geringen Druck auf die Schaumschicht 4 ausüben muß, um sie in die Oberfläche 6 hineinzudrücken, und da die Rakel 7 darüber hinaus die Oberfläche 6, wenn überhaupt, nur leicht berührt, wird die Struktur der Oberfläche 6 durch das Eindrücken der Schaumschicht 4 praktisch nicht verändert.

Stromab der Rakel 7 bildet die in die Oberfläche 6 hinein gedrückte Schaumschicht 4 eine mit 8 bezeichnete Beschichtung oder Imprägnierung, bei der der noch weitgehend intakte Schaum die Fasern im Bereich der Oberfläche 6 vollständig umgibt und benetzt, und die vorherigen Öffnungen in der Oberfläche 6 zwischen den Fasern schließt. Im Zuge der Trocknung oder Aushärtung der Beschichtung 8 zerplatzen jedoch die Schaumbläschen, und die Beschichtungsmasse konzentriert sich an den einzelnen Fasern, mit Resten der vorherigen räumlichen Schaumstruktur zwischen den Fasern.

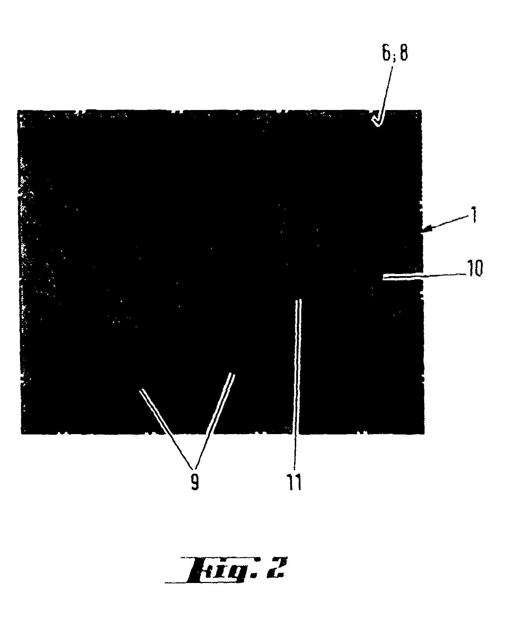

Eine sich beispielhaft ergebende Konsistenz der beschichteten Oberfläche ist aus Fig. 2 ersichtlich, welche eine Draufsicht auf die Beschichtung 8 nach ihrer Trocknung bzw. Aushärtung darstellt. Deutlich sind die oberflächennahen Mineralfasern 9 zu erkennen, die von Beschichtungsmaterial umhüllt sind. An der Oberfläche im Bereich zwischen den Fasern sind spinnwebenähnliche Brückenbildungen 10 aus Beschichtungsmaterial erkennbar, zwischen denen aber in jedem Falle Poren 11 recht erheblicher Größe verbleiben, so daß die offene Struktur der Oberfläche aufrecht erhalten ist.

Durch die makroskopischen Poren 11 hindurch kann Putz oder dergleichen besonders gut abfiltrieren und entwässern, so daß sich schnell eine gute Putzhaftung ergibt Diese wird unterstützt durch in äußere Poren eindringende Putzpartikel, die sich gewissermaßen in der porösen Oberfläche der Beschichtung 8 festkrallen können. Bei Verwendung als Dachdämmplatte wiederum kann die Größe der Poren 11 doch wiederum so gering eingestellt werden, daß flüssiges Bitumen aufgrund seiner Oberflächenspannung und Viskosität nicht durch die Beschichtung 8 hindurchdringen kann.

## Patentansprüche

1. Mineralwolleprodukt (1), wie Fassadendämmplatte oder Dachdämmplatte, mit einer Beschichtung (8) auf der Basis eines anorganischen silikatischen Bindemittels, wobei die Beschichtung im wesentlichen in dem an die Produktoberfläche (6) angrenzenden Bereich innerhalb der Mineralwolle angeordnet ist, und wobei das Beschichtungsmaterial in dem durch die Beschichtungstiefe (t) definierten Bereich an den einzelnen Fasern (9) des Mineralwolleproduktes anhaftet und diese umgibt, ohne die Zwischenräume zwischen den Fasern zu schließen, derart, daß eine offene Oberflächenstruktur der Faseroberfläche erhalten bleibt,
erhältlich durch das Aufbringen einer Beschichtungsmasse auf der Basis des anorganischen silikatischen Bindemittels mit einer Trägerflüssigkeit für die Aufbringung, durch Einarbeiten der Beschichtungsmasse in die Produktoberfläche (6) und durch nachfolgendes Trocknen der Beschichtungsmasse zur Verflüchtigung der Trägerflüssigkeit, wobei die Beschichtungsmasse vor ihrem Auftrag aufgeschäumt ist,
*dadurch gekennzeichnet, daß*
die geschäumte Beschichtungsmasse in einer Menge von 20 bis 100 g/m² bezogen auf die getrocknete Beschichtung (8) aufgetragen ist, und daß
im Bereich zwischen den Fasern spinnwebenähnliche Brückenbildungen (10) aus Beschichtungsmaterial vorliegen.

2. Mineralwolleprodukt nach Anspruch 1, *dadurch gekennzeichnet, daß* in der Beschichtung (8) Kieselsäure (SiO₂) und ein organischer Kunststoff vorgesehen sind.

3. Mineralwolleprodukt nach einem der Ansprüche 1 oder 2, *dadurch gekennzeichnet, daß* die Beschichtung (8) ein Flammschutzmittel enthält.

4. Verfahren zur Herstellung eines Mineralwolleproduktes nach einem der Ansprüche 1 bis 3, *dadurch gekennzeichnet, daß* man die Beschichtungsmasse in einer Schicht (4) als Schaum auf die Oberfläche (6) des Mineralwolleproduktes aufträgt und dabei oder anschließend in die Oberfläche des Mineralwolleproduktes eindrückt, und anschließend die Beschichtung (8) trocknet.

5. Verfahren nach Anspruch 4, *dadurch gekennzeichnet, daß* man die geschäumte Beschichtungsmasse kurz vor ihrer Anwendung aus einer Mischung, die Kieselsol, einen Schaumbildner (Schaummittel), einen Schaumstabilisator, ggfs. ein Flammschutzmittel (Brandhemmer), und eine Trägerflüssigkeit, insbesondere Wasser, enthält, mit einem mechanischen Verfahren erzeugt.

6. Verfahren nach Anspruch 4 oder 5, *dadurch gekennzeichnet, daß* die geschäumte Beschichtungsmasse in einer Menge von 30 bis 80 g/m² und vorzugsweise 40 bis 70 g/m², jeweils bezogen auf die getrocknete Beschichtung (8), aufgetragen wird.

7. Geschäumte Beschichtungsmasse, insbesondere zur Verwendung im Verfahren nach einem der Ansprüche 4 bis 6, *gekennzeichnet durch* eine Mischung aus
| | |
|---|---|
| 25 bis 40 Gew.% | Kieselsol (40 Gew.% Feststoffanteil SiO₂) |
| 2 bis 10 Gew.% | Kunststoffdispersion |
| 0,3 bis 1,5 Gew.% | Schaumbildner |
| 0,05 bis 0,5 Gew.% | Schaumstabilisator |
| Flammschutzmittel | nach Bedarf |
| Rest | Wasser, |
die nach einem mechanischen Verfahren aufgeschäumt ist.

8. Verwendung der Beschichtungsmasse nach Anspruch 7, zur nachträglichen Beschichtung eingebauter Mineralfaserprodukte, insbesondere zur Sanierung der Dämmschichtoberfläche von hinterlüfteten Fassaden.

## Claims

1. A mineral wool product (1), such as a facade insulating panel or roof insulating panel, with a coating (8) based on an inorganic siliceous binder, the coating being disposed inside the mineral wool substantially in the zone adjoining the product surface (6), the coating material adhering to and surrounding the individual fibres (9) of the mineral wool product in the zone defined by the coating depth (t), without closing the interstices between the fibres, in such manner that an open surface structure of the fibre surface is maintained,
obtainable by applying a coating material based on the inorganic siliceous binder with a carrier liquid for the application, by incorporating the coating material in the product surface (6) and by subsequent drying of the coating material to evaporate the carrier liquid, the coating material being foamed before its application, characterised in that
the foamed coating material is applied in a quantity of 20 to 100 g/m² referred to the dried coating (8), and in that bridges (10) of coating material after the style of spider-webs are present in the zone between the fibres.

2. A mineral wool product according to claim 1, characterised in that silicic acid (SiO₂) and an organic plastic are provided in the coating (8).

3. A mineral wool product according to claim 1 or 2, characterised in that the coating (8) contains a flame retardant.

4. A process for the production of a mineral wool product according to any one of claims 1-3, characterised in that the coating material is applied in a layer (4) in the form of a foam to the surface (6) of the mineral wool product and during or subsequent to this operation is pressed into the surface of the mineral wool product and the coating (8) is then dried.

5. A process according to claim 4 characterised in that shortly before it is used the foamed coating material is produced by a mechanical process from a mixture containing silica sol, a foam former (foam agent), a foam stabiliser, if required a flame retardant (fire inhibitor), and a carrier liquid, more particularly water.

6. A process according to claim 4 or 5, characterised in that the foamed coating material is applied in a quantity of from 30 to 80 g/m², and preferably 40 to 70 g/m², respectively referred to the dried coating (8).

7. A foamed coating material, more particularly for use in the process according to any one of claims 4 to 6, characterised by a mixture of:
| | |
|---|---|
| 25 to 40% by weight | silica sol (40% by weight solid content SiO₂) |
| 2 to 10% by weight | plastic dispersion |
| 0.3 to 1.5% by weight | foam former |
| 0.05 to 0.5% by weight | foam stabiliser |
| flame retardant | as required |
| remainder | water |
which is foamed up by a mechanical process.

8. Use of the coating material according to claim 7 for the subsequent coating of installed mineral fibre products, more particularly for refurbishing the insulating layer surface of back-ventilated facades.

## Revendications

1. Produit de laine minérale (1), comme une plaque d'isolation de façade ou une plaque d'isolation de toit, ayant un revêtement (8) à base d'un liant inorganique de silicate, le revêtement étant disposé, pour l'essentiel, au sein de la laine minérale, dans le domaine adjacent à la surface du produit (5), et le matériau de revêtement adhérant, dans le domaine défini par la profondeur de revêtement (t), aux fibres individuelles (9) du produit de laine minérale et entourant ces dernières, sans fermer les espaces intermédiaires entre les fibres, de sorte qu'une structure superficielle ouverte de la surface des fibres reste maintenue,
disponible grâce à l'application d'une masse de revêtement à base du liant inorganique de silicate, à l'aide d'un liquide vecteur pour l'application, grâce à la mise en oeuvre de la masse de revêtement dans la surface du produit (6) et grâce au séchage subséquent de la masse de revêtement en vue de la volatilisation du liquide vecteur, la masse de revêtement étant soumise à un moussage avant son application,
*caractérisé en ce que*
la masse de revêtement alvéolaire est appliquée dans une quantité de 20 à 100 g/m², par rapport au revêtement séché (8), et en ce que, dans le domaine entre les fibres, soient présentes des structures de ponts similaires à des toiles d'araignées (10) en matériau de revêtement.

2. Produit de laine minérale selon la revendication 1, *caractérisé en ce que* l'on prévoit, dans le revêtement (8), de l'acide silicique (SiO₂) et une matière synthétique organique.

3. Produit de laine minérale selon l'une quelconque des revendications 1 ou 2, *caractérisé en ce que* le revêtement (8) contient un agent ignifuge.

4. Procédé de fabrication d'un produit de laine minérale selon l'une quelconque des revendications 1 à *3, caractérisé en ce que* l'on applique la masse de revêtement en une couche (4) sous forme de mousse sur la surface (6) du produit de laine minérale et que l'on presse cette masse de revêtement au même moment ou par la suite sur la surface du produit de laine minérale et en ce qu'il y a ensuite séchage du revêtement (8).

5. Procédé selon la revendication 4, *caractérisé en ce que* l'on produit, à l'aide d'un procédé mécanique, la masse de revêtement alvéolaire, juste avant son utilisation, à partir d'un mélange qui contient un sol de silice, un agent formateur de mousse (agent moussant), un agent stabilisateur de la mousse, le cas échéant un agent ignifuge (agent anti inflammation) et un liquide vecteur, en particulier de l'eau.

6. Procédé selon la revendication 4 ou 5, *caractérisé en ce que* la masse de revêtement alvéolaire est appliquée dans une quantité de 30 à 80 g/m² et de préférence de 40 à 70 g/m², à chaque fois par rapport au revêtement séché (8).

7. Masse de revêtement alvéolaire, en particulier en vue de l'utilisation dans le procédé selon l'une quelconque des revendications 4 à 6, *caractérisé par* un mélange
| | |
|---|---|
| de 25 à 40% en poids | de sol de silice (40% en poids de matières solides SiO₂) |
| de 2 à 20% en poids | de dispersion de matières synthétiques |
| de 0,3 à 1,5% en poids | d'agent formateur mousse |
| de 0,05 à 0,5% en poids | d'agent stabilisateur de mousse |
| d'agent ignifuge | selon le besoin |
| le restant étant | de l'eau, |
lequel mélange est soumis à une opération de moussage conformément à un procédé mécanique.

8. Utilisation de la masse de revêtement selon la revendication 7, en vue du revêtement subséquent de produits de fibres minérales incorporés, en particulier en vue de la remise en état de surfaces à couches d'isolation de façades ventilées par l'arrière.
